# NEUE EUROPÄISCHE PATENTSCHRIFT

(11) **EP 3 784 974 B2**
(45) Veröffentlichungstag und Bekanntmachung des Hinweises auf die Entscheidung über den Einspruch: **15.01.2025**
(45) Hinweis auf die Patenterteilung: 02.03.2022
(21) Anmeldenummer: 19720366.4
(22) Anmeldetag: 17.04.2019
(51) Int. Cl.: F28D 9/00, F28F 3/12, F28F 27/00, G01K 11/32

(54) **PLATTENWÄRMETAUSCHER, VERFAHRENSTECHNISCHE ANLAGE UND VERFAHREN**
PLATE HEAT EXCHANGER, PROCESS ENGINEERING SYSTEM AND METHOD
ÉCHANGEUR DE CHALEUR EN PLAQUES, INSTALLATION TECHNIQUE DE PROCÉDÉ ET PROCÉDÉ

(30) Priorität: 27.04.2018 DE 102018003479
(43) Veröffentlichungstag der Anmeldung: 03.03.2021
(73) Patentinhaber: Linde GmbH, 82049 Pullach (DE)
(72) Erfinder: STEINBAUER, Manfred, 82399 Raisting (DE); FLÜGGEN, Rainer, 83673 Bichl (DE); KERBER, Christiane, 82343 Pöcking (DE); LEHMACHER, Axel, 82544 Egling-Moosham (DE); BAUMGARTNER, Clemens, 82538 Geretsried (DE); BRAUN, Konrad, 83661 Lenggries (DE); HOFFMANN, Rainer, 82008 Unterhaching (DE); WOITALKA, Alexander, 81369 München (DE); GEWALD, Stefan, 82061 Neuried (DE); BLANK, Janine, 83361 Kienberg (DE)
(74) Vertreter: Meilinger, Claudia Sabine
(86) Internationale Anmeldenummer: PCT/EP2019/025110
(87) Internationale Veröffentlichungsnummer: WO 2019/206455

(56) Entgegenhaltungen:
- WO-A1-2014/056587
- DE-A1- 102009 049 479
- DE-A1- 102014 018 825
- DE-A1- 102016 000 246
- JP-A- 2014 169 809
- US-A1- 2012 082 182
- US-A1- 2015 241 141
- US-A1- 2015 369 548
- US-A1- 2018 045 471
- Traduction machine de DI
- "Optical Waveguide Sensing and Imaging", 2008, SPRINGER, article BOCK W., ET AL.: "Chapter 7", pages: 114 - 115
- "Handbook of Modern Sensors: Physics, Designs, and Applications", 2010, SPRINGER, article FRADEN JACOB: "Handbook of Modern Sensors: Physics, Designs, and Applications, fourth edition", pages: 353 - 355
- Traduction machine de D5
- ANONYMOUS: "THE STANDARDS OF THE BRAZED ALUMINIUM PLATE-FIN HEAT EXCHANGER MANUFACTURERS' ASSOCIATION", ALPEMA, 2000, pages 1 - 78
- "Additive Manufacturing Technologies 3D Printing, Rapid Prototyping, and Direct Digital Manufacturing, second edition", 2010, SPRINGER, article I. GUBSON ET AL.: "Additive Manufacturing Technologies 3D Printing, Rapid Prototyping, and Direct Digital Manufacturing, second edition", pages: 1 - 510

## Beschreibung

Die Erfindung betrifft einen Plattenwärmetauscher für eine verfahrenstechnische Anlage, eine verfahrenstechnische Anlage mit einem derartigen Plattenwärmetauscher und ein Verfahren zum Herstellen eines derartigen Plattenwärmetauschers.

Sogenannte Plattenwärmetauscher umfassen eine Vielzahl an Lamellen oder Fins, zwischen denen Trennbleche angeordnet sind. Die Trennbleche trennen benachbarte Wärmeübertragungspassagen derart voneinander, dass ein stofflicher Übergang zwischen den Wärmeübertragungspassagen verhindert, jedoch ein Wärmeübergang ermöglicht wird. Thermische Spannungen infolge unterschiedlicher Wärmedehnungen aus differentiellen Temperaturunterschieden können jedoch zur mechanischen Schädigung der Dichtheit zwischen den Wärmeübertragungspassagen bis hin zur Undichtigkeit des Plattenwärmetauschers gegenüber seiner Umgebung führen. Zur Analyse des Temperaturfeldes kann ein derartiger Plattenwärmetauscher beispielsweise mit einer Temperaturmessung auf einer Oberfläche seiner Außenhaut ausgestattet sein. Die Temperaturen auf der Außenhaut liefern jedoch nur einen lokalen Wert, mit dem unter Annahmen auf die Temperatur im Inneren des Plattenwärmetauschers zurückgeschlossen werden kann. Diese Temperaturmessungen können jedoch aufgrund der Messung an der Außenhaut von Umwelteinflüssen beeinflusst werden.

Die WO 2014/056587 A1 beschreibt einen Plattenwärmetauscher mit einem Lichtwellenleiter zur Temperaturmessung. Der Lichtwellenleiter ist dabei in einer offenen Nut positioniert, die entweder in einer Lamelle oder in einem Trennblech des Plattenwärmetauschers vorgesehen ist.

Vor diesem Hintergrund besteht eine Aufgabe der vorliegenden Erfindung darin, einen verbesserten Wärmetauscher zur Verfügung zu stellen.

Demgemäß wird ein Plattenwärmetauscher für eine verfahrenstechnische Anlage gemäß Patent anspruch 1 vorgeschlagen.

Dadurch, dass der Lichtwellenleiter innerhalb der Trennplatte angeordnet ist, kann zum einen eine Beschädigung des Lichtwellenleiters verhindert werden. Zum anderen ist eine hochauflösende und exakte Messung der Temperatur direkt in der Trennplatte und somit auch im Inneren des Plattenwärmetauschers möglich. Dadurch, dass der Lichtwellenleiter in die Trennplatte integriert ist, ist kein zusätzlicher oder zumindest nur ein geringfügiger zusätzlicher Bauraum zur Erfassung der Temperaturverteilung und/oder Dehnungsverteilung erforderlich. Da die Trennplatte innerhalb des Plattenwärmetauschers angeordnet ist, ergibt sich keine Beeinflussung der gemessenen Temperatur durch Umgebungseinflüsse. Mit Hilfe des Lichtwellenleiters können sowohl Dehnungsmessungen als auch Temperaturmessungen durchgeführt werden. Die Erhöhung der Bauteilsicherheit gegen Versagen oder Leckagen nach innen oder nach außen wird erhöht.

Darunter, dass die Lamellen und die Trennplatten "abwechselnd" angeordnet sind, ist zu verstehen, dass zwischen zwei Lamellen eine Trennplatte und zwischen zwei Trennplatten eine Lamelle angeordnet ist. Die Anzahl der Lamellen und die Anzahl der Trennplatten ist grundsätzlich beliebig. Die Lamellen und die Trennplatten sind insbesondere zwischen zwei Deckplatten des Plattenwärmetauschers positioniert. Von den Lamellen gebildete Schichten, sogenannte Lamellenschichten, formen sogenannte Passagen, insbesondere Wärmeübertragungspassagen, die durch Randleisten oder Sidebars zur Umgebung abgetrennt sind. Der Lichtwellenleiter ist vorzugsweise ein Glasfaser-Sensorkabel. Der Lichtwellenleiter kann somit ein Sensorelement einer Messeinrichtung des Plattenwärmetauschers sein. Dass der Lichtwellenleiter in die zumindest eine Trennplatte "eingebettet" ist, bedeutet, dass der Lichtwellenleiter vollständig innerhalb der Trennplatte angeordnet ist. Die von der zumindest einen Trennplatte aufgespannte Ebene verläuft vorzugsweise derart mittig durch die zumindest eine Trennplatte, dass diese bezüglich der Ebene bevorzugt spiegelsymmetrisch aufgebaut ist.

Die zumindest eine Trennplatte weist vorzugsweise eine rechteckförmige Geometrie auf, wobei die Trennplatte eine Dicke von etwa 1 bis 2 mm aufweisen kann. Damit ist die zumindest eine Trennplatte nicht oder nur geringfügig dicker als eine Trennplatte ohne einen derartigen Lichtwellenleiter. Die Trennplatten können als Trennbleche bezeichnet werden. Die Lamellen können als Fins bezeichnet werden. Es können mehrere Trennplatten mit einem derartigen Lichtwellenleiter versehen sein. Die zumindest eine Trennplatte umfasst bevorzugt zumindest einen Lichtwellenleiter. Ferner kann die zumindest eine Trennplatte mehrere, insbesondere unterschiedliche, Lichtwellenleiter umfassen. Die Lamellen können eine gewellte oder gestufte Geometrie aufweisen. Aufgrund des eingebetteten Lichtwellenleiters kann die zumindest eine Trennplatte als intelligente Trennplatte bezeichnet werden.

Die von der Trennplatte aufgespannte Ebene ist eine Haupterstreckungsebene der Trennplatte. Das heißt, die Trennplatte erstreckt sich blechförmig oder plattenförmig in der Ebene. Die Ebene wird insbesondere von einer Breitenrichtung und einer Tiefenrichtung der Trennplatte aufgespannt. Die Ebene wird insbesondere nicht von einer Dickenrichtung der Trennplatte aufgespannt. Die Dickenrichtung ist vielmehr senkrecht zu der Ebene orientiert. Unter "senkrecht" ist vorliegend ein Winkel von 90° ± 10°, weiter bevorzugt von 90° ± 5°, weiter bevorzugt von 90° ± 1°, weiter bevorzugt von genau 90° zu verstehen. Die Breitenrichtung, die Tiefenrichtung und die Dickenrichtung bilden ein Koordinatensystem der zumindest einen Trennplatte. Die Dickenrichtung kann dabei mit einer der zu der Ebene senkrecht positionierten Richtungen übereinstimmen. Das heißt, der Lichtwellenleiter ist insbesondere in der Dickenrichtung der Trennplatte zweiseitig oder beidseitig von dem Material der Trennplatte abgedeckt oder verdeckt.

Darunter, dass der Lichtwellenleiter "beidseitig" oder "zweiseitig" von dem Material der Trennplatte abgedeckt ist, ist zu verstehen, dass sowohl in der ersten Richtung betrachtet als auch in der zweiten Richtung betrachtet der Lichtwellenleiter insbesondere sowohl oberseitig als auch unterseitig von dem Material der Trennplatte bedeckt oder abgedeckt ist. Darunter, dass die erste Richtung und die zweite Richtung "gegensinnig" orientiert sind, ist zu verstehen, dass die beiden Richtungen voneinander weg weisen. Insbesondere ist die erste Richtung parallel zu der zweiten Richtung orientiert. Die beiden Richtungen sind insbesondere in einem Winkel von 180° zueinander positioniert.

Gemäß einer Ausführungsform umfasst der Plattenwärmetauscher eine erste Lamelle und eine zweite Lamelle, wobei die zumindest eine Trennplatte zwischen der ersten Lamelle und der zweiten Lamelle angeordnet ist, und wobei der Lichtwellenleiter derart in die zumindest eine Trennplatte eingebettet ist, dass der Lichtwellenleiter sowohl in Richtung der ersten Lamelle als auch in Richtung der zweiten Lamelle von dem Material der zumindest einen Trennplatte abgedeckt ist.

Die Anzahl der Lamellen ist, wie zuvor erwähnt, beliebig. Dabei ist jeweils zwischen zwei Lamellen eine Trennplatte und umgekehrt angeordnet. Dass der Lichtwellenleiter sowohl in Richtung der ersten Lamelle als auch in Richtung der zweiten Lamelle von dem Material der zumindest einen Trennplatte abgedeckt ist, bedeutet, dass die Trennplatte sowohl zwischen der ersten Lamelle und dem Lichtwellenleiter als auch zwischen der zweiten Lamelle und dem Lichtwellenleiter angeordnet ist. Das heißt, der Lichtwellenleiter gerät nicht in direkten Kontakt mit einer der Lamellen.

Erfindungsgemäß weist die zumindest eine Trennplatte einen ersten Trennplattenabschnitt und einen zweiten Trennplattenabschnitt auf, zwischen denen der Lichtwellenleiter angeordnet ist.

Der erste Trennplattenabschnitt und der zweite Trennplattenabschnitt können jeweils als Bleche, insbesondere als Aluminiumbleche oder Stahlbleche, ausgebildet sein. Beispielsweise weisen der erste Trennplattenabschnitt und der zweite Trennplattenabschnitt eine identische Dicke oder unterschiedliche Dicken auf. Beispielsweise ist der erste Trennplattenabschnitt zwischen dem Lichtwellenleiter und der ersten Lamelle und der zweite Trennplattenabschnitt ist zwischen dem Lichtwellenleiter und der zweiten Lamelle oder umgekehrt positioniert.

Erfingungsgemäß sind der erste Trennplattenabschnitt und der zweite Trennplattenabschnitt mit Hilfe eines Lots stoffschlüssig miteinander verbunden.

Bei stoffschlüssigen Verbindungen werden die Verbindungspartner durch atomare oder molekulare Kräfte zusammengehalten. Stoffschlüssige Verbindungen sind nicht lösbare Verbindungen, die sich nur durch Zerstörung der Verbindungsmittel, in diesem Fall dem Lot, oder der Verbindungspartner, in diesem Fall der Trennplattenabschnitte, voneinander lösen lassen. Die Trennplattenabschnitte können auch miteinander verschweißt sein.

Gemäß einer weiteren Ausführungsform ist der Lichtwellenleiter in das Lot eingebettet.

Erfindungsgemäß weist der erste Trennplattenabschnitt und der zweite Trennplattenabschnitt eine Nut auf, in der der Lichtwellenleiter angeordnet ist.

Die Nut kann einen Hohlraum innerhalb der zumindest einen Trennplatte bilden. Der Lichtwellenleiter kann frei beweglich in der Nut aufgenommen sein. Alternativ kann die Nut auch mit dem Lot gefüllt sein, so dass die Lichtwellenleiter in das Lot eingebettet ist. Die Nut kann gerade, zickzackförmig oder mäanderförmig durch die zumindest eine Trennplatte hindurchlaufen.

Gemäß einer weiteren Ausführungsform ist der Lichtwellenleiter in einer Hülse aufgenommen.

Die Hülse ist vorzugsweise eine Metallhülse. Die Hülse kann in das Lot eingebettet sein. Der Lichtwellenleiter ist bevorzugt linear axial verschiebbar in der Hülse aufgenommen.

Ferner wird eine verfahrenstechnische Anlage mit einem derartigen Plattenwärmetauscher vorgeschlagen.

Die verfahrenstechnische Anlage kann beispielsweise eine Anlage zur Luftzerlegung, zur Flüssiggaserzeugung oder eine in der petrochemischen Industrie eingesetzte Anlage sein. Die verfahrenstechnische Anlage kann eine Vielzahl derartiger Plattenwärmetauscher umfassen.

Weiterhin wird ein Verfahren zum Herstellen eines Plattenwärmetauschers für eine verfahrenstechnische Anlage gemäß Patentanspruch 6 vorgeschlagen.

In dem Schritt c) wird insbesondere zumindest ein Lichtwellenleiter bereitgestellt. Es können jedoch auch mehrere, insbesondere auch unterschiedliche, Lichtwellenleiter bereitgestellt werden. Der Schritt d) kann alternativ auch ein Einbetten der zuvor erwähnten Hülse umfassen, derart, dass die Hülse in der ersten Richtung und in der zweiten Richtung beidseitig von Material der zumindest einen Trennplatte abgedeckt wird. Die Hülse kann auch zusammen mit dem Lichtwellenleiter eingebettet werden. In diesem Fall wird der Lichtwellenleiter vor dem Einbetten desselben in die Hülse eingeführt. Alternativ kann der Lichtwellenleiter auch nach dem Einbetten der Hülse in diese eingeführt werden. Die Schritte a) bis e) müssen nicht in der alphabetischen Reihenfolge durchgeführt werden. Beispielsweise kann das Einbetten des insbesondere zumindest einen Lichtwellenleiters oder auch der Hülse in die zumindest eine Trennplatte bereits in dem Schritt b), nämlich bei dem Bereitstellen der Vielzahl an Trennplatten erfolgen. Es kann eine Vielzahl an Trennplatten vorgesehen sein, in die jeweils ein Lichtwellenleiter oder eine Hülse eingebettet wird. Bevorzugt ist jedochzumindest eine derartige Trennplatte vorgesehen.

Gemäß einer Ausführungsform wird in dem Schritt d) der Lichtwellenleiter zwischen einem ersten Trennplattenabschnitt und einem zweiten Trennplattenabschnitt der zumindest einen Trennplatte angeordnet.

In den senkrecht zu der von der zumindest einen Trennplatte aufgespannten Ebene orientierten Richtungen decken der erste Trennplattenabschnitt und der zweite Trennplattenabschnitt den Lichtwellenleiter zweiseitig oder beidseitig ab, so dass dieser in den beiden Richtungen betrachtet beidseitig von dem Material der Trennplatte abgedeckt oder verdeckt ist.

Erfindungsgemäß werden in dem Schritt d) der erste Trennplattenabschnitt und der zweite Trennplattenabschnitt mit Hilfe eines Lots stoffschlüssig miteinander verbunden.

Hierbei kann der Lichtwellenleiter oder die Hülse, in der der Lichtwellenleiter aufgenommen ist, in das Lot eingebettet werden. Die Trennplattenabschnitte können auch miteinander verschweißt werden.

Gemäß einer weiteren Ausführungsform wird in dem Schritt d) der Lichtwellenleiter oder eine Hülse, in der der Lichtwellenleiter aufnehmbar ist, in einer Nut, die der erste Trennplattenabschnitt und der zweite Trennplattenabschnitt aufweist, angeordnet.

Die Nut kann mit dem Lot aufgefüllt sein. Die Nut kann auch lotfrei sein, so dass der Lichtwellenleiter in der Nut beweglich ist. Die Nut kann rechteckförmig sein. Die Nut kann aber auch jede andere Geometrie aufweisen.

Weitere mögliche Implementierungen des Plattenwärmetauschers, der verfahrenstechnischen Anlage und/oder des Verfahrens umfassen auch nicht explizit genannte Kombinationen von zuvor oder im Folgenden bezüglich der Ausführungsbeispiele beschriebenen Merkmalen oder Ausführungsformen. Dabei wird der Fachmann auch Einzelaspekte als Verbesserungen oder Ergänzungen zu der jeweiligen Grundform des Plattenwärmetauschers, der verfahrenstechnischen Anlage und/oder des Verfahrens hinzufügen.

Weitere vorteilhafte Ausgestaltungen und Aspekte des Plattenwärmetauschers, der verfahrenstechnischen Anlage und/oder des Verfahrens sind Gegenstand der Unteransprüche sowie der im Folgenden beschriebenen Ausführungsbeispiele des Plattenwärmetauschers, der verfahrenstechnischen Anlage und/oder des Verfahrens. Im Weiteren werden der Plattenwärmetauscher, die verfahrenstechnische Anlage und/oder das Verfahren anhand von bevorzugten Ausführungsformen unter Bezugnahme auf die beigelegten Figuren näher erläutert.
Fig. 1 zeigt eine schematische perspektivische Ansicht einer Ausführungsform eines Plattenwärmetauschers;
Fig. 2 zeigt eine weitere schematische perspektivische Ansicht des Plattenwärmetauschers gemäß Fig. 1;
Fig. 3 zeigt eine schematische Teilschnittansicht des Plattenwärmetauschers gemäß Fig. 1;
Fig. 4 zeigt eine schematische Ansicht einer Ausführungsform einer Trennplatte für den Plattenwärmetauscher gemäß Fig. 1;
Fig. 5 zeigt eine Trennplatte 6, die keine Ausführungform der vorliegenden Erfindung darstellt
Fig. 6 zeigt eine Trennplatte 6, die keine Ausführungform der vorliegenden Erfindung darstellt
Fig. 7 zeigt eine Trennplatte 6, die keine Ausführungform der vorliegenden Erfindung darstellt
Fig. 8 zeigt eine Trennplatte 6, die keine Ausführungform der vorliegenden Erfindung darstellt
Fig. 9 zeigt eine Trennplatte 6, die keine Ausführungform der vorliegenden Erfindung darstellt
Fig. 10 zeigt ein schematisches Blockdiagramm einer Ausführungsform eines Verfahrens zum Herstellen des Plattenwärmetauschers gemäß Fig. 1.

In den Figuren sind gleiche oder funktionsgleiche Elemente mit denselben Bezugszeichen versehen worden, sofern nichts anderes angegeben ist.

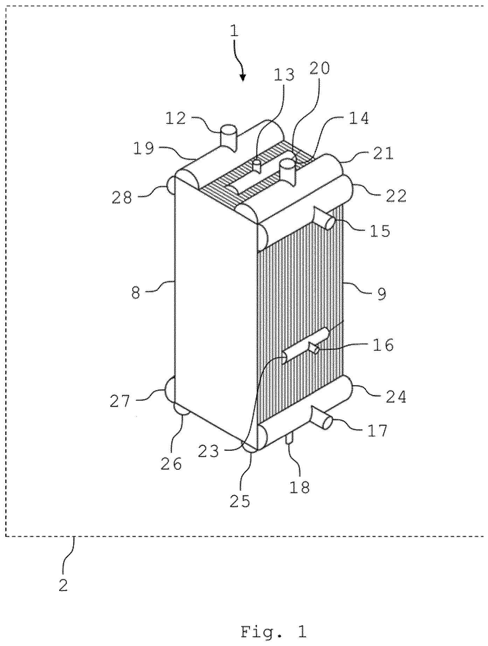

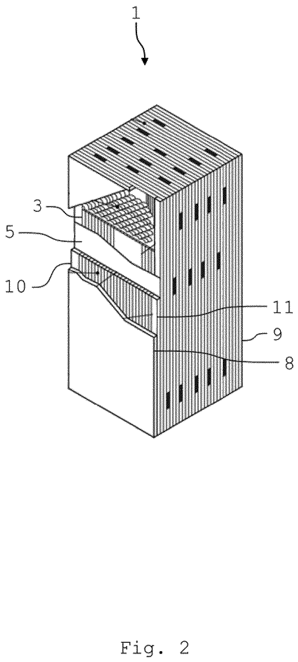

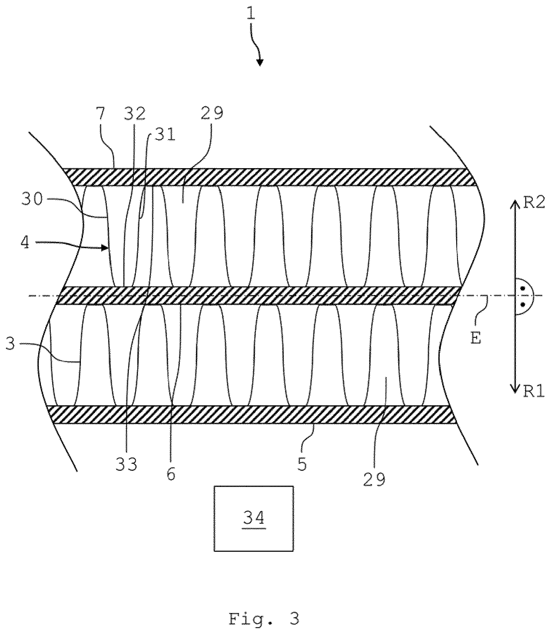

Die Fig. 1 und 2 zeigen jeweils eine schematische perspektivische Ansicht einer Ausführungsform eines Plattenwärmeübertragers oder Plattenwärmetauschers 1. Die Fig. 3 zeigt eine schematische Teilschnittansicht des Plattenwärmetauschers 1. Nachfolgend wird auf die Fig. 1 bis 3 gleichzeitig Bezug genommen.

Der Plattenwärmetauscher 1 ist insbesondere ein Plate Fin Heat Exchanger (PFHE) oder kann als solcher bezeichnet werden. Der Plattenwärmetauscher 1 kann Teil einer verfahrenstechnischen Anlage 2 sein. Die verfahrenstechnische Anlage 2 kann beispielsweise eine Anlage zur Luftzerlegung, zur Herstellung von Flüssiggas (Engl.: Liquefied Natural Gas, LNG), eine in der petrochemischen Industrie eingesetzte Anlage oder dergleichen sein. Die verfahrenstechnische Anlage 2 kann eine Vielzahl derartiger Plattenwärmetauscher 1 umfassen.

Der Plattenwärmetauscher 1 ist quaderförmig oder blockförmig aufgebaut und umfasst eine Vielzahl an Lamellen 3, 4 (Fig. 3) sowie eine Vielzahl an Trennplatten 5 bis 7. Die Lamellen 3, 4 sind so genannte Fins, insbesondere Heat Transfer Fins, oder können als Fins bezeichnet werden. Die Lamellen 3, 4 können als gewellte oder gerippte Bleche, beispielsweise als Aluminiumbleche oder Stahlbleche, insbesondere als Edelstahlbleche, ausgebildet sein. Die Trennplatten 5 bis 7 sind Trennbleche oder können als Trennbleche bezeichnet werden. Die Trennplatten 5 bis 7 können beispielsweise aus Aluminium oder Stahl, insbesondere aus Edelstahl, gefertigt sein. Die Anzahl der Lamellen 3, 4 und Trennplatten 5 bis 7 ist beliebig.

Der Plattenwärmetauscher 1 umfasst weiterhin Deckplatten 8, 9, zwischen denen die Vielzahl an Lamellen 3, 4 und die Vielzahl an Trennplatten 5 bis 7 angeordnet sind. Die Deckplatten 8, 9 können dabei identisch wie die Trennplatten 5 bis 7 aufgebaut sein.

Weiterhin umfasst der Plattenwärmetauscher 1 sogenannten Sidebars oder Randleisten 10, 11, die die Lamellen 3, 4 seitlich begrenzen. Die Randleisten 10, 11 können mit den Trennplatten 5 bis 7 und/oder den Lamellen 3, 4 stoffschlüssig verbunden, beispielsweise verlötet oder verschweißt, sein. Bei stoffschlüssigen Verbindungen werden die Verbindungspartner durch atomare oder molekulare Kräfte zusammengehalten. Stoffschlüssige Verbindungen sind nicht lösbare Verbindungen, die sich nur durch Zerstörung der Verbindungsmittel trennen lassen.

Mit Hilfe der Lamellen 3, 4 und der Trennplatten 5 bis 7 bildet der Plattenwärmetauscher 1 eine Vielzahl an parallelen Wärmeübertragungspassagen aus, in denen Prozessmedien strömen können und indirekt Wärme auf in benachbarten Wärmeübertragungspassagen geführte Prozessmedien übertragen können. Die einzelnen Wärmeübertragungspassagen können mit Hilfe von Stutzen 12 bis 18 und sogenannten Headern 19 bis 28 jeweils mit einem Strom eines Prozessmediums beschickt werden. Die Header 19 bis 28 können als Verteiler bezeichnet werden oder sind Verteiler.

Wie die Fig. 3 zeigt, sind die Lamellen 3, 4 und die Trennplatten 5 bis 7 abwechselnd angeordnet. Das heißt, zwischen zwei Lamellen 3, 4 ist jeweils eine Trennplatte 5 bis 7 und zwischen zwei Trennplatten 5 bis 7 ist jeweils eine Lamelle 3, 4 positioniert. Die Lamellen 3, 4 und die Trennplatten 5 bis 7 können dabei stoffschlüssig miteinander verbunden sein. Beispielsweise können die Lamellen 3, 4 und die Trennplatten 5 bis 7 miteinander verlötet oder verschweißt sein. Die Anzahl der Lamellen 3, 4 und die Anzahl der Trennplatten 5 bis 7 ist dabei, wie zuvor erwähnt, beliebig. Die Deckplatten 8, 9 sind dabei außenseitig auf einer jeweils äußersten Lamelle 3, 4 positioniert und schließen den Plattenwärmetauscher 1 somit in der Orientierung der Fig. 1 und 2 nach vorne und hinten ab. In der Fig. 3 sind lediglich zwei Lamellen 3, 4, insbesondere eine erste Lamelle 3 sowie eine zweite Lamelle 4, und drei Trennplatten 5 bis 7 gezeigt. Die Lamellen 3, 4 sind identisch aufgebaut.

Jede Trennplatte 5 bis 7 spannt eine Ebene E auf. In der Fig. 3 ist lediglich eine der Trennplatte 6 zugeordnete Ebene E dargestellt. Die Ebene E verläuft dabei senkrecht zu einer Zeichenebene der Fig. 3 mittig durch die Trennplatte 6 hindurch. Der Ebene E wiederum sind eine erste Richtung R1, die senkrecht zu der Ebene E orientiert ist, und eine zweite Richtung R2, die ebenfalls senkrecht zu der Ebene E orientiert ist, zugeordnet. Unter "senkrecht" ist vorliegend ein Winkel von 90° ± 10°, weiter bevorzugt von 90° ± 5°, weiter bevorzugt von 90° ± 1°, weiter bevorzugt von genau 90° zu verstehen. Die Richtungen R1, R2 sind dabei von der Ebene E weg und gegensinnig zueinander orientiert. In der Orientierung der Fig. 3 ist die erste Richtung R1 nach unten und die zweite Richtung R2 nach oben orientiert. Umgekehrt kann jedoch auch die erste Richtung R1 nach oben und die zweite Richtung R2 nach unten orientiert sein.

Wie die Fig. 3 weiterhin zeigt, weisen die Lamellen 3, 4 eine gewellte Geometrie auf, so dass eine Mehrzahl an parallelen Kanälen 29 gebildet wird. In den Kanälen 29 der ersten Lamelle 3 kann ein wie zuvor erwähntes Prozessmedium strömen, das dann in indirekten Wärmeaustausch mit einem in einer parallelen Lamelle 3, 4, in diesem Fall der zweiten Lamelle 4, geführten Prozessmedium treten kann. Die Kanäle 29 benachbarter Lamellen 3, 4 können parallel zueinander, schräg zueinander oder senkrecht zueinander orientiert sein.

Die gewellte Geometrie der Lamellen 3, 4 wird dadurch gebildet, dass jede Lamelle 3, 4 jeweils eine Vielzahl an parallel zueinander angeordneten Schenkeln 30, 31 aufweist, die sich insbesondere senkrecht zu den Trennplatten 5 bis 7 erstrecken. Weiterhin umfassen die Lamellen 3, 4 jeweils zweite Schenkel 32, 33, die parallel zueinander positioniert sind und die die ersten Schenkel 30, 31 in der Orientierung der Fig. 3 jeweils abwechselnd oben und unten miteinander verbinden. Die Schenkel 30 bis 33 können dabei miteinander verrundet sein, so dass sich die gewellte Geometrie ergibt. Alternativ können die Schenkel 30 bis 33 auch ohne Verrundungen miteinander verbunden sein, so dass sich eine gestufte Geometrie der Lamellen 3, 4 ergibt.

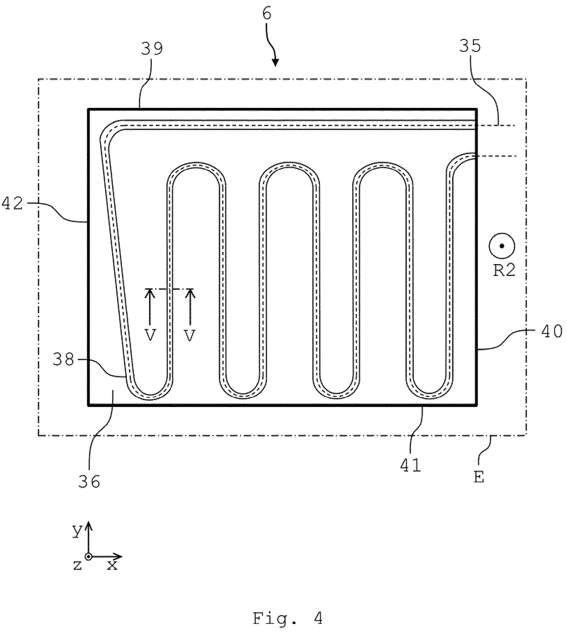

Ein wie zuvor erläuterter Plattenwärmetauscher 1 kann empfindlich in Bezug auf thermische Spannungen sein. Diese thermischen Spannungen können durch unterschiedliche Temperaturen der sich im Wärmeaustausch befindlichen Prozessmedien hervorgerufen werden. Thermische Spannungen können zu mechanischer Schädigung des Plattenwärmetauschers 1 und insbesondere zu Undichtigkeit zwischen den einzelnen Wärmeübertragungspassagen bis hin zu Undichtigkeit gegenüber einer Umgebung des Plattenwärmetauschers 1 führen. Aus diesem Grund ist eine Messeinrichtung 34 vorgesehen, die dazu eingerichtet ist, einen zeitlichen Verlauf der Temperaturverteilung und/oder einer Dehnungsverteilung innerhalb des Plattenwärmetauschers 1, insbesondere ortsaufgelöst, zu messen beziehungsweise zu erfassen. Als Sensorelement umfasst die Messeinrichtung 34 hierbei einen Lichtwellenleiter 35 (Fig. 4). Der Lichtwellenleiter 35 ist insbesondere ein Glasfaser-Sensorkabel.

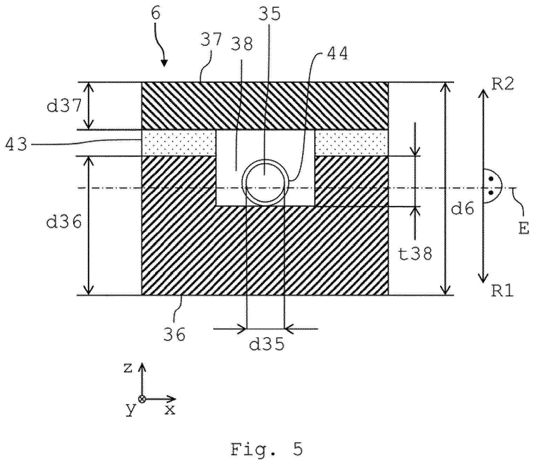

Wie die Fig. 4 und 5 anhand der Trennplatte 6 zeigen, ist der Lichtwellenleiter 35 (in der Fig. 4 gestrichelt dargestellt) in die Trennplatte 6 eingebettet. Auch die Trennplatten 5, 7 können, müssen jedoch nicht, einen derartigen Lichtwellenleiter 35 umfassen. Das heißt, die Trennplatten 5 bis 7 können identisch aufgebaut sein. Nachfolgend wird jedoch nur auf die Trennplatte 6 eingegangen.

Die Trennplatte 6 kann einen ersten Trennplattenabschnitt 36 sowie einen zweiten Trennplattenabschnitt 37 umfassen. Zwischen dem ersten Trennplattenabschnitt 36 und dem zweiten Trennplattenabschnitt 37 ist der Lichtwellenleiter 35 angeordnet. Die Trennplattenabschnitte 36, 37 sind dabei blechförmig ausgebildet. Beispielsweise weist die Trennplatte 6 somit eine Dicke d6 von etwa 1,4 mm auf. Der Lichtwellenleiter 35 selbst kann einen Durchmesser d35 von etwa 125 µm aufweisen. Der erste Trennplattenabschnitt 36 weist eine Dicke d36 auf, und der zweite Trennplattenabschnitt 37 weist eine Dicke d37 auf. Die Dicken d36, d37 können gleich groß oder unterschiedlich groß sein. Beispielsweise ist die Dicke d36 größer als die Dicke d37. Die Ebene E verläuft bevorzugt mittig durch die Trennplatte 6 hindurch.

In dem ersten Trennplattenabschnitt 36 und/oder in dem zweiten Trennplattenabschnitt 37 ist eine Nut 38 vorgesehen, in der der Lichtwellenleiter 35 aufgenommen ist. Die Nut 38 kann, wie in der Fig. 5 gezeigt, im Querschnitt rechteckförmig sein. Die Nut 38 kann jedoch jede beliebige Geometrie aufweisen. Die Nut 38 weist eine Tiefe t38 auf. Die Tiefe t38 kann beispielsweise 0,2 mm betragen. Die Nut 38 ist, wie in der Fig. 4 gezeigt, zickzackförmig oder mäanderförmig ausgebildet und verläuft durch zumindest einen der Trennplattenabschnitte 36, 37 hindurch. Die Trennplatte 6 umfasst dabei vier Seitenkanten 39 bis 42, wobei die Nut 38 jedoch nur an einer der Seitenkanten 39 bis 42, nämlich an der Seitenkante 40, in den jeweiligen Trennplattenabschnitt 36, 37 hineinläuft und wieder aus diesem herausläuft. Das heißt, der Lichtwellenleiter 35 wird an der Seitenkante 40 in die Trennplatte 6 hinein- und auch wieder aus dieser herausgeführt.

Die Trennplatte 6 umfasst eine x-Richtung oder Breitenrichtung x, eine senkrecht zu der Breitenrichtung x orientierte y-Richtung oder Tiefenrichtung y sowie eine sowohl senkrecht zu der Breitenrichtung x als auch senkrecht zu der Tiefenrichtung y orientierte z-Richtung oder Dickenrichtung z. Die Richtungen x, y, z bilden ein Koordinatensystem der Trennplatte 6. Die Dicken d6, d36, d37 und die Tiefe t38 werden in der Dickenrichtung z gemessen. Die Dickenrichtung z kann mit der zweiten Richtung R2 übereinstimmen. Die Seitenkanten 39, 41 verlaufen in der Breitenrichtung x, und die Seitenkanten 40, 42 verlaufen in der Tiefenrichtung y. Die Ebene E wird insbesondere von der Breitenrichtung x und der Tiefenrichtung y der Trennplatte 6 aufgespannt. Die Dickenrichtung z ist, wie die Richtungen R1, R2, senkrecht zu der Ebene E orientiert.

Der erste Trennplattenabschnitt 36 und der zweite Trennplattenabschnitt 37 sind mit Hilfe eines Lots 43 stoffschlüssig miteinander verbunden. Das Lot 43 ist dabei flächig zwischen dem ersten Trennplattenabschnitt 36 und dem zweiten Trennplattenabschnitt 37 vorgesehen. Das Lot 43 kann auch einen von der Nut 38 zwischen den Trennplattenabschnitten 36, 37 gebildeten Hohlraum ausfüllen. Der Lichtwellenleiter 35 kann ferner noch eine Hülse 44 aufweisen, in der der Lichtwellenleiter 35 aufgenommen ist. Der Lichtwellenleiter 35 ist verschiebbar in der Hülse 44 aufgenommen. Die Hülse 44 kann beispielsweise aus einem Metall gefertigt sein.

Der Lichtwellenleiter 35 ist nun derart in die Trennplatte 6 eingebettet, dass der Lichtwellenleiter 35 in beiden Richtungen R1, R2 betrachtet zweiseitig oder beidseitig von Material der Trennplatte 6 abgedeckt ist. Das heißt, in der Orientierung der Fig. 5 ist der Lichtwellenleiter 35 nach unten hin, das heißt, in der ersten Richtung R1, von dem ersten Trennplattenabschnitt 36 und nach oben hin, das heißt, in der zweiten Richtung R2, von dem zweiten Trennplattenabschnitt 37 abgedeckt oder verdeckt. Mit anderen Worten deckt der erste Trennplattenabschnitt 36 in der Orientierung der Fig. 5 mit Blickrichtung von unten auf die Trennplatte 6 den Lichtwellenleiter 35 ab, und der zweite Trennplattenabschnitt 37 deckt den Lichtwellenleiter 35 mit Blickrichtung von oben auf die Trennplatte 6 ab. Insbesondere ist der Lichtwellenleiter 35 sowohl in Richtung R1 der ersten Lamelle 3 als auch in Richtung R2 der zweiten Lamelle 4 von Material der Trennplatte 6, das heißt, von den beiden Trennplattenabschnitten 36, 37 abgedeckt (Fig. 3). Die Trennplatte 6 kann aufgrund des eingebetteten Lichtwellenleiters 35 als intelligente Trennplatte bezeichnet werden.

Die Messeinrichtung 34 ist nun geeignet, mit Hilfe des eingebetteten Lichtwellenleiters 35 eine Temperaturverteilung und/oder eine Dehnungsverteilung in der Trennplatte 6, insbesondere ortsaufgelöst, zu erfassen beziehungsweise zu messen. Beispielsweise kann die Temperaturmessung über die Auswertung von optischen Signalen, wie sie durch Raman-Streuung entstehen, erfolgen. Ein wie zuvor erläuterter Lichtwellenleiter 35 wird in der Regel aus dotiertem Quarzglas (amorphe Festkörperstruktur aus hauptsächlich Siliziumdioxid) gefertigt. In diesen amorphen Festkörperstrukturen werden über thermische Effekte Gitterschwingungen induziert. Diese Gitterschwingungen sind temperaturabhängig. Licht, welches auf die Moleküle in dem Lichtwellenleiter 35 trifft, tritt in Wechselwirkung mit den Elektronen der Moleküle. Diese Wechselwirkungen nennt man Raman-Streuung. Das zurückgestreute Licht lässt sich in drei spektrale Gruppen einteilen.

Neben der Rayleigh-Streuung, welche der Wellenlänge des eingestrahlten Lichts entspricht, existieren die sogenannten Stokes- und die sogenannten Anti-Stokes-Komponenten. Im Gegensatz zu den, zu höheren Wellenlängen verschobenen und temperaturunabhängigen, Stokes-Komponenten sind die zu kleineren Wellenlängen verschobenen Anti-Stokes-Komponenten temperaturabhängig. Ein Intensitätsverhältnis zwischen Stokes- und Anti-Stokes-Komponenten kann somit zur Temperaturmessung genutzt werden. Über eine Fourier-Transformation dieser beiden rückgestreuten Komponenten im Vergleich mit einer Fourier-Transformation eines Referenzsignals erhält man die Intensität der beiden Komponenten über der Länge des Lichtwellenleiters 35. Somit kann über den Vergleich der beiden Intensitäten die Temperatur für jeden Punkt des Lichtwellenleiters 35 ermittelt werden.

Alternativ kann die Temperaturmessung über die Auswertung von optischen Signalen, wie sie durch Brillouin-Streuung des Lichtwellenleiters 35 entstehen, erfolgen. In diesem Fall basiert die Temperaturmessung auf der ortsaufgelösten Bestimmung einer Differenzfrequenz zwischen einer, in den Lichtwellenleiter 35 eingekoppelten, primären Lichtwelle und einer durch sie infolge von Brillouin-Streuung im Lichtwellenleiter 35 induzierten und zurückgestreuten Welle, welche in ihrer Frequenz in Abhängigkeit von der Temperatur gegenüber der primären Lichtwelle verringert ist. Bei gepulst eingestrahlter primärer Lichtwelle kann durch zeitaufgelöste Detektion des Signallichtes für verschiedene Frequenzdifferenzen und der Kenntnis der Pulslaufzeit die Frequenzverschiebung aufgrund der Temperaturveränderung ortsaufgelöst bestimmt werden. Auch in diesem Fall lässt sich somit durch die Auswertung der optischen Signale die Temperatur an jedem beliebigen Punkt des Lichtwellenleiters 35 bestimmen.

Weiterhin kann die Temperaturmessung über die Auswertung von optischen Signalen, wie sie durch Streuung an einem Bragg-Gitter entstehen, erfolgen. Bragg-Gitter sind in den Lichtwellenleiter 35 eingeschriebene optische Bandfilter, welche nahezu beliebig oft im Lichtwellenleiter 35 platziert werden können. Eine Mittenwellenzahl eines Bandstopps ergibt sich dabei aus der sogenannten Bragg-Bedingung. Eine spektrale Breite des Bandstopps hängt neben einer Gitterlänge und der Brechzahl von der Temperatur ab. Somit kann man bei gegebener und über den Lichtwellenleiter 35 verschiedener Gitterlänge und Brechzahl die Temperatur an der jeweiligen Stelle des Bragg-Gitters über die Breite des Bandstopps bestimmen.

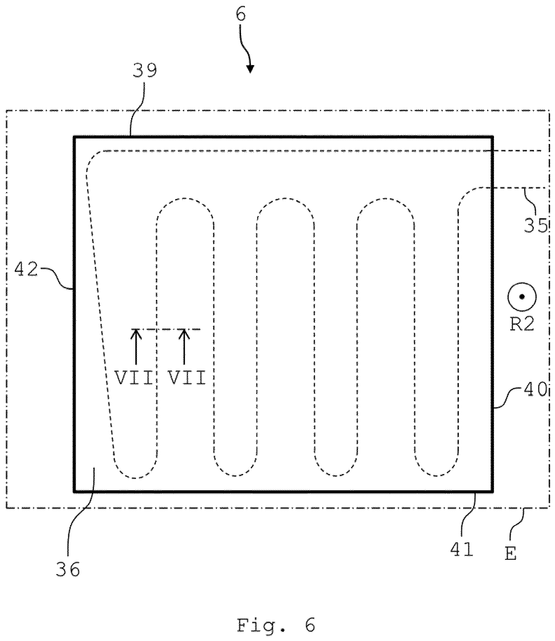

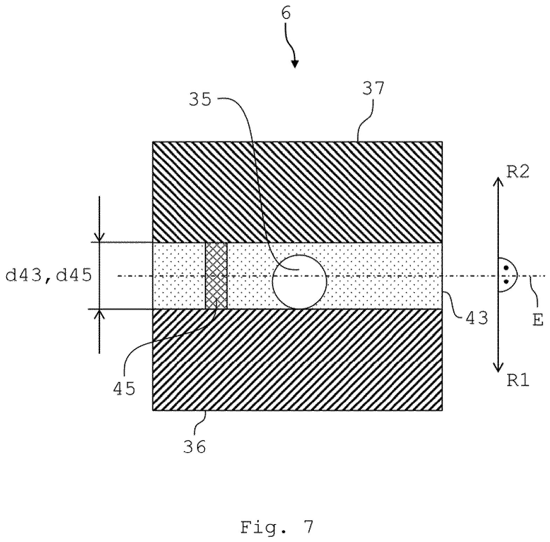

Die Fig. 6 und 7 zeigen eine weitere Ausführungsform einer Trennplatte 6. Bei dieser Ausführungsform der Trennplatte 6 ist keine wie zuvor erläuterte Nut 38 vorgesehen. Die Trennplatte 6 umfasst einen wie zuvor erläuterten ersten Trennplattenabschnitt 36 sowie einen zweiten Trennplattenabschnitt 37, zwischen denen der Lichtwellenleiter 35 angeordnet ist. Der Lichtwellenleiter 35 kann wiederum die zuvor erläuterte Hülse 44 (in der Fig. 7 nicht gezeigt) umfassen. Der erste Trennplattenabschnitt 36 und der zweite Trennplattenabschnitt 37 sind mit Hilfe eines Lots 43 stoffschlüssig miteinander verbunden, wobei der Lichtwellenleiter 35 beziehungsweise die Hülse 44 direkt in das Lot 43 eingebettet ist.

Zwischen dem ersten Trennplattenabschnitt 36 und dem zweiten Trennplattenabschnitt 37 kann eine Stützkonstruktion oder ein Abstandshalter 45 vorgesehen sein, der eine Beschädigung des Lichtwellenleiters 35 bei der Montage der Trennplatte 6 verhindert. Der Abstandshalter 45 weist dabei eine Dicke d45 auf, die größer ist als der Durchmesser d35 (Fig. 5) des Lichtwellenleiters 35. Der Abstandshalter 45 kann eine Stahlleiste sein. Der Abstandshalter 45 ist in das Lot 43 eingebettet. Der Abstandshalter 45 bestimmt auch eine Dicke d43 des Lots 43. Die Dicke d45 kann beispielsweise 170 µm betragen. Das heißt, auch die Dicke d43 des Lots 43 kann dementsprechend 170 µm betragen.

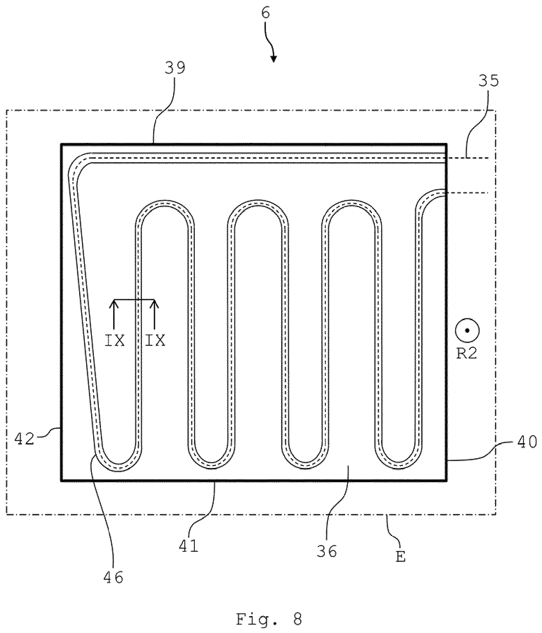

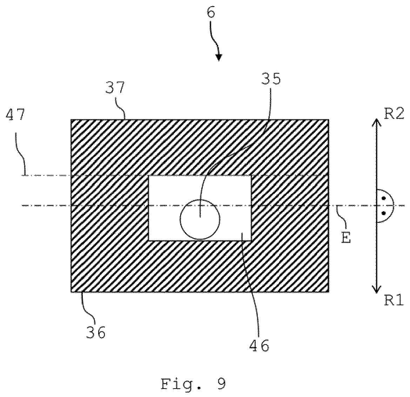

Die Fig. 8 und 9 zeigen eine weitere Ausführungsform einer Trennplatte 6. Bei dieser Ausführungsform der Trennplatte 6 umfasst diese keine zwei voneinander getrennten Trennplattenabschnitte 36, 37, die mit Hilfe eines Lots 43 miteinander verbunden sind. Vielmehr sind zwei einteilig, insbesondere materialeinstückig, miteinander verbundene Trennplattenabschnitte 36, 37 vorgesehen. Das heißt, die Trennplattenabschnitte 36, 37 sind durchgehend aus demselben Material gebildet und somit untrennbar miteinander verbunden.

Bei dieser Ausführungsform der Trennplatte 6 ist der Lichtwellenleiter 35 vollständig von Material der Trennplatte 6 umgeben. Die Trennplatte 6 ist dabei einteilig, insbesondere materialeinstückig, ausgebildet. Hierzu wird die Trennplatte 6 mit Hilfe eines additiven oder generativen Fertigungsverfahrens hergestellt. Beispielsweise kann ein pulverbasiertes generatives Fertigungsverfahren, insbesondere ein 3D-Druckverfahren, verwendet werden. Hierzu wird die Trennplatte 6 aus einem pulverförmigen Werkstoff aufgebaut. Dieser pulverförmige Werkstoff kann beispielsweise mit Hilfe eines Laserstrahls lagenweise aufgeschmolzen werden, um die Trennplatte 6 zu bilden. Beispielsweise kann als generatives Fertigungsverfahren selektives Laserschmelzen (SLM), selektives Lasersintern (SLS) oder dergleichen eingesetzt werden. Dass die Trennplatte 6 mit Hilfe eines generativen Fertigungsverfahrens hergestellt ist, lässt sich mikroskopisch durch einen schichtweisen oder lagenweisen Aufbau der Trennplatte 6 nachweisen.

In der Trennplatte 6 ist ein Kanal 46 gebildet, in dem der Lichtwellenleiter 35 aufgenommen ist. Der Lichtwellenleiter 35 wiederum kann, wie zuvor erwähnt, in einer Hülse 44 aufgenommen sein. Die Trennplatte 6 kann beispielsweise derart hergestellt werden, dass das Fertigungsverfahren zum Herstellen der Trennplatte 6 so durchgeführt wird, dass zuerst ein in der Orientierung der Fig. 9 unterer Teil der Trennplatte 6, nämlich der erste Trennplattenabschnitt 36, bis zu einer Trennlinie 47 gefertigt wird. In dem ersten Trennplattenabschnitt 36 ist dann der Kanal 46 für den Lichtwellenleiter 35 vorgesehen. Anschließend wird der Lichtwellenleiter 35 in den Kanal 46 eingelegt und dieser wird mit Hilfe des Fertigungsverfahrens durch Herstellen des zweiten Trennplattenabschnitts 37 geschlossen. Die derart hergestellte integrale Trennplatte 6 kann dann beispielsweise mit einer Lotschicht versehen werden und in einen üblichen Fertigungsprozess zum Herstellen eines wie zuvor erläuterten Plattenwärmetauschers 1 eingebunden werden.

Mit Hilfe der zuvor erwähnten Trennplatte 6 kann eine hochauflösende und exakte Messung der Temperatur und/oder der Dehnung an oder in der Trennplatte 6 selbst erfolgen. Es ist kein zusätzlicher oder nur ein geringfügig zusätzlicher Bauraum erforderlich. Es kann keine unerwünschte Beeinflussung der gemessenen Temperatur durch Umwelteinflüsse geben, da die Trennplatte 6 innerhalb des Plattenwärmetauschers 1 positioniert ist. Es sind sowohl Dehnungs- als auch Temperaturmessung möglich. Hierzu können unterschiedliche Fasertypen für den Lichtwellenleiter 35 gewählt werden. Es können auch mehrere, insbesondere unterschiedliche, Lichtwellenleiter 35 in der Trennplatte 6 vorgesehen sein. Mit Hilfe der Trennplatte 6 kann somit eine Erhöhung der Bauteilsicherheit gegen Versagen beziehungsweise gegen Leckagen nach innen und außen erreicht werden. Die Verfügbarkeit der Trennplatte 6 wird erhöht. In der Trennplatte 6 vorgesehene Kanäle (nicht gezeigt) können auch zur Entnahme von Stoffproben dienen, sofern diese mit der entsprechenden Wärmeübertragungspassage verbunden sind.

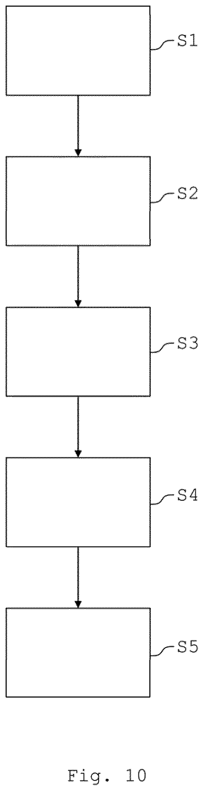

Die Fig. 10 zeigt ein schematisches Blockdiagramm einer Ausführungsform eines Verfahrens zum Herstellen eines wie zuvor erläuterten Plattenwärmetauschers 1. In einem Schritt S1 wird eine Vielzahl an Lamellen 3, 4 bereitgestellt. Bei dem Bereitstellen der Lamellen 3, 4 können unverformte Rohbleche zu den gewellten oder gestuften Lamellen 3, 4 umgeformt werden. In einem Schritt S2 wird eine Vielzahl an Trennplatten 5 bis 7 bereitgestellt.

In einem Schritt S3 wird zumindest ein Lichtwellenleiter 35 bereitgestellt. In einem weiteren Schritt S4 wird der Lichtwellenleiter 35 in zumindest eine der Trennplatten 5 bis 7, nämlich beispielsweise in die Trennplatte 6, derart eingebettet, dass der Lichtwellenleiter 35 sowohl in der ersten Richtung R1 als auch in der zweiten Richtung R2 betrachtet zweiseitig oder beidseitig von Material der zumindest einen Trennplatte 6 abgedeckt wird. Anschließend können die Lamellen 3, 4 und die Trennplatten 5 bis 7 in einem Schritt S5 abwechselnd angeordnet werden, um den Plattenwärmetauscher 1 zu bilden. Dabei können die die Lamellen 3, 4 und die Trennplatten 5 bis 7 miteinander verlötet oder verschweißt werden.

Das Einbetten des Lichtwellenleiters 35 kann dabei dadurch erfolgen, dass der Lichtwellenleiter 35 zwischen dem ersten Trennplattenabschnitt 36 und dem zweiten Trennplattenabschnitt 37 angeordnet wird. Die beiden Trennplattenabschnitte 36, 37 können dabei mit Hilfe des Lots 43 stoffschlüssig miteinander verbunden werden. Dabei kann der Lichtwellenleiter 35 entweder in dem Lot 43 eingebettet werden, oder der Lichtwellenleiter wird vor dem Verlöten oder Verschweißen der beiden Trennplattenabschnitte 36, 37 in die an zumindest einem der Trennplattenabschnitte 36, 37 vorgesehene Nut 38 eingelegt. Alternativ kann die Trennplatte 6 auch mit Hilfe eines generativen Fertigungsverfahrens um den Lichtwellenleiter 35 herum aufgebaut werden.

Obwohl die vorliegende Erfindung anhand von Ausführungsbeispielen beschrieben wurde, ist sie vielfältig modifizierbar.

### Verwendete Bezugszeichen

- 1: Plattenwärmetauscher
- 2: verfahrenstechnische Anlage
- 3: Lamelle
- 4: Lamelle
- 5: Trennplatte
- 6: Trennplatte
- 7: Trennplatte
- 8: Deckplatte
- 9: Deckplatte
- 10: Randleiste
- 11: Randleiste
- 12: Stutzen
- 13: Stutzen
- 14: Stutzen
- 15: Stutzen
- 16: Stutzen
- 17: Stutzen
- 18: Stutzen
- 19: Header
- 20: Header
- 21: Header
- 22: Header
- 23: Header
- 24: Header
- 25: Header
- 26: Header
- 27: Header
- 28: Header
- 29: Kanal
- 30: Schenkel
- 31: Schenkel
- 32: Schenkel
- 33: Schenkel
- 34: Messeinrichtung
- 35: Lichtwellenleiter
- 36: Trennplattenabschnitt
- 37: Trennplattenabschnitt
- 38: Nut
- 39: Seitenkante
- 40: Seitenkante
- 41: Seitenkante
- 42: Seitenkante
- 43: Lot
- 44: Hülse
- 45: Abstandshalter
- 46: Kanal
- 47: Trennlinie

- d6: Dicke
- d35: Durchmesser
- d36: Dicke
- d37: Dicke
- d43: Dicke
- d45: Dicke
- E: Ebene
- R1: Richtung
- R2: Richtung
- S1: Schritt
- S2: Schritt
- S3: Schritt
- S4: Schritt
- S5: Schritt
- t38: Tiefe
- x: Breitenrichtung
- y: Tiefenrichtung
- z: Dickenrichtung

## Patentansprüche

1. Plattenwärmetauscher (1) für eine verfahrenstechnische Anlage (2), mit einer Vielzahl an Lamellen (3, 4) und einer Vielzahl an Trennplatten (5 - 7), die abwechselnd angeordnet sind, wobei zumindest eine Trennplatte (6) einen Lichtwellenleiter (35) aufweist, der derart in die zumindest eine Trennplatte (6) eingebettet ist, dass der Lichtwellenleiter (35) in einer ersten Richtung (R1) und in einer zweiten Richtung (R2), die jeweils senkrecht zu einer von der zumindest einen Trennplatte (6) aufgespannten Ebene (E) und gegensinnig zueinander orientiert sind, beidseitig von Material der zumindest einen Trennplatte (6) abgedeckt ist, wobei die zumindest eine Trennplatte (6) einen ersten Trennplattenabschnitt (36) und einen zweiten Trennplattenabschnitt (37) aufweist, zwischen denen der Lichtwellenleiter (35) angeordnet ist, wobei der erste Trennplattenabschnitt (36) und der zweite Trennplattenabschnitt (37) mit Hilfe eines Lots (43) stoffschlüssig miteinander verbunden sind, wobei der erste Trennplattenabschnitt (36) und der zweite Trennplattenabschnitt (37) eine Nut (38) aufweist, in der der Lichtwellenleiter (35) angeordnet ist.

2. Plattenwärmetauscher nach Anspruch 1, umfassend eine erste Lamelle (3) und eine zweite Lamelle (4), wobei die zumindest eine Trennplatte (6) zwischen der ersten Lamelle (3) und der zweiten Lamelle (4) angeordnet ist, und wobei der Lichtwellenleiter (35) derart in die zumindest eine Trennplatte (6) eingebettet ist, dass der Lichtwellenleiter (35) sowohl in Richtung (R1) der ersten Lamelle (3) als auch in Richtung (R2) der zweiten Lamelle (4) von dem Material der zumindest einen Trennplatte (6) abgedeckt ist.

3. Plattenwärmetauscher nach einem der Ansprüche 1 - 2, wobei der Lichtwellenleiter (35) in das Lot (43) eingebettet ist.

4. Plattenwärmetauscher nach einem der Ansprüche 1 - 3, wobei der Lichtwellenleiter (35) in einer Hülse (44) aufgenommen ist.

5. Verfahrenstechnische Anlage (2) mit einem Plattenwärmetauscher (1) nach einem der Ansprüche 1 - 4.

6. Verfahren zum Herstellen eines Plattenwärmetauschers (1) für eine verfahrenstechnische Anlage (2), mit folgenden Schritten:
a) Bereitstellen (S1) einer Vielzahl an Lamellen (3, 4),
b) Bereitstellen (S2) einer Vielzahl an Trennplatten (5 - 7),
c) Bereitstellen (S3) eines Lichtwellenleiters (35),
d) Einbetten (S4) des Lichtwellenleiters (35) in zumindest eine Trennplatte (6) derart, dass der Lichtwellenleiter (35) in einer ersten Richtung (R1) und in einer zweiten Richtung (R2), die jeweils senkrecht zu einer von der zumindest einen Trennplatte (6) aufgespannten Ebene (E) und gegensinnig zueinander orientiert sind, beidseitig von Material der zumindest einen Trennplatte (6) abgedeckt wird, wobei der Lichtwellenleiter (35) zwischen einem ersten Trennplattenabschnitt (36) und einem zweiten Trennplattenabschnitt (37) der zumindest einen Trennplatte (6) angeordnet wird, wobei der erste Trennplattenabschnitt (36) und der zweite Trennplattenabschnitt (37) mit Hilfe eines Lots (43) stoffschlüssig miteinander verbunden werden, und wobei der Lichtwellenleiter (35) in einer Nut (38), die der erste Trennplattenabschnitt (36) und der zweite Trennplattenabschnitt (37) aufweist, angeordnet wird,
e) abwechselndes Anordnen (S5) der Lamellen (3, 4) und der Trennplatten (5 - 7)

7. Verfahren nach Anspruch 6, wobei in dem Schritt d) eine Hülse (44), in der der Lichtwellenleiter (35) aufnehmbar ist, in der Nut (38) angeordnet wird.

## Claims

1. Plate heat exchanger (1) for a process engineering system (2), having a plurality of lamellae (3, 4) and a plurality of separating plates (5-7) which are arranged alternately, wherein at least one separating plate (6) has an optical waveguide (35) which is embedded in the at least one separating plate (6) in such a way that the optical waveguide (35) is covered on both sides by material of the at least one separating plate (6) in a first direction (R1) and in a second direction (R2), which are each oriented perpendicularly to a plane (E) spanned by the at least one separating plate (6) and in opposite directions to one another, wherein the at least one separating plate (6) has a first separating plate portion (36) and a second separating plate portion (37), between which the optical waveguide (35) is arranged, wherein the first separating plate portion (36) and the second separating plate portion (37) are integrally connected to one another by means of a solder (43), wherein the first separating plate portion (36) and the second separating plate portion (37) has a groove (38) in which the optical waveguide (35) is arranged.

2. Plate heat exchanger according to claim 1, comprising a first lamella (3) and a second lamella (4), wherein the at least one separating plate (6) is arranged between the first lamella (3) and the second lamella (4), and wherein the optical waveguide (35) is embedded in the at least one separating plate (6) in such a way that the optical waveguide (35) is covered by the material of the at least one separating plate (6) both in the direction (R1) of the first lamella (3) and in the direction (R2) of the second lamella (4).

3. Plate heat exchanger according to either one of claims 1-2, wherein the optical waveguide (35) is embedded in the solder (43).

4. Plate heat exchanger according to any one of claims 1-3, wherein the optical waveguide (35) is accommodated in a sleeve (44).

5. Process engineering system (2) having a plate heat exchanger (1) according to any one of claims 1-4.

6. Method for producing a plate heat exchanger (1) for a process engineering system (2), comprising the following steps:
a) providing (S1) a plurality of lamellae (3, 4),
b) providing (S2) a plurality of separating plates (5-7),
c) providing (S3) an optical waveguide (35),
d) embedding (S4) the optical waveguide (35) in at least one separating plate (6) in such a way that the optical waveguide (35) is covered on both sides by material of the at least one separating plate (6) in a first direction (R1) and in a second direction (R2), which are each oriented perpendicularly to a plane (E) spanned by the at least one separating plate (6) and oriented in opposite directions to one another, wherein the optical waveguide (35) is arranged between a first separating plate portion (36) and a second separating plate portion (37) of the at least one separating plate (6), wherein the first separating plate portion (36) and the second separating plate portion (37) are integrally connected to one another by means of a solder (43), and wherein the optical waveguide (35) is arranged in a groove (38) which the first separating plate portion (36) and the second separating plate portion (37) has,
e) alternately arranging (S5) the lamellae (3, 4) and the separating plates (5-7)

7. Method according to claim 6, wherein in step d) a sleeve (44) in which the optical waveguide (35) can be accommodated is arranged in the groove (38).

## Revendications

1. Échangeur de chaleur en plaques (1) pour une installation technique de procédé (2), comportant une pluralité de lamelles (3, 4) et une pluralité de plaques séparatrices (5 - 7) qui sont disposées de manière alternée, dans lequel au moins une plaque séparatrice (6) présente un guide d'ondes lumineuses (35) qui est incorporé dans l'au moins une plaque séparatrice (6) de telle sorte que, dans une première direction (R1) et dans une seconde direction (R2) respectivement perpendiculaires à un plan (E) défini par l'au moins une plaque séparatrice (6) et orientées en sens inverse l'une de l'autre, le guide d'ondes lumineuses (35) est recouvert des deux côtés par du matériau de l'au moins une plaque séparatrice (6), dans lequel l'au moins une plaque séparatrice (6) présente une première section (36) de plaque séparatrice et une seconde section (37) de plaque séparatrice entre lesquelles est disposé le guide d'ondes lumineuses (35), dans lequel la première section (36) de plaque séparatrice et la seconde section (37) de plaque séparatrice sont reliées l'une à l'autre par liaison de matière à l'aide d'une soudure (43), dans lequel la première section (36) de plaque séparatrice et la seconde section (37) de plaque séparatrice présentent une rainure (38) dans laquelle est disposé le guide d'ondes lumineuses (35).

2. Échangeur de chaleur en plaques selon la revendication 1, comprenant une première lamelle (3) et une seconde lamelle (4), dans lequel l'au moins une plaque séparatrice (6) est disposée entre la première lamelle (3) et la seconde lamelle (4) et dans lequel le guide d'ondes lumineuses (35) est incorporé dans l'au moins une plaque séparatrice (6) de telle sorte que le guide d'ondes lumineuses (35) est recouvert par le matériau de l'au moins une plaque séparatrice (6) aussi bien dans la direction (R1) de la première lamelle (3) que dans la direction (R2) de la seconde lamelle (4).

3. Échangeur de chaleur en plaques selon l'une des revendications 1 à 2, dans lequel le guide d'ondes lumineuses (35) est incorporé dans la soudure (43).

4. Échangeur de chaleur en plaques selon l'une des revendications 1 à 3, dans lequel le guide d'ondes lumineuses (35) est reçu dans une douille (44).

5. Installation technique de procédé (2) comportant un échangeur de chaleur en plaques (1) selon l'une des revendications 1 à 4.

6. Procédé de fabrication d'un échangeur de chaleur en plaques (1) pour une installation technique de procédé (2) comprenant les étapes suivantes :
a) préparation (S1) d'une pluralité de lamelles (3, 4),
b) préparation (S2) d'une pluralité de plaques séparatrices (5 - 7),
c) préparation (S3) d'un guide d'ondes lumineuses (35),
d) incorporation (S4) du guide d'ondes lumineuses (35) dans au moins une plaque séparatrice (6) de telle sorte que le guide d'ondes lumineuses (35) est recouvert des deux côtés par du matériau de l'au moins une plaque séparatrice (6) dans une première direction (R1) et dans une seconde direction (R2), lesquelles directions sont respectivement perpendiculaires à un plan (E) défini par l'au moins une plaque séparatrice (6) et orientées en sens inverse l'une de l'autre, dans lequel le guide d'ondes lumineuses (35) est disposé entre une première section (36) de plaque séparatrice et une seconde section (37) de plaque séparatrice de l'au moins une plaque séparatrice (6), dans lequel la première section (36) de plaque séparatrice et la seconde section (37) de plaque séparatrice sont reliées entre elles par liaison de matière à l'aide d'une soudure (43), et dans lequel le guide d'ondes lumineuses (35) est disposé dans une rainure (38) que présentent la première section (36) de plaque séparatrice et la seconde section (37) de plaque séparatrice,
e) disposition alternée (S5) des lamelles (3, 4) et des plaques séparatrices (5 - 7).

7. Procédé selon la revendication 6, dans lequel, à l'étape d), une douille (44), dans laquelle le guide d'ondes lumineuses (35) peut être reçu, est disposée dans la rainure (38).
